# EUROPEAN PATENT SPECIFICATION

(11) **EP 4 358 242 B1**
(45) Date of publication and mention of the grant of the patent: **02.09.2026**
(21) Application number: 21960940.1
(22) Date of filing: 20.10.2021
(51) Int. Cl.: H01M 50/107, H01M 50/152, H01M 50/59, H01M 50/559, H01M 10/04, H01M 50/176, H01M 50/184, H01M 50/186, H01M 50/55, H01M 50/553, H01M 50/578, H01M 50/593

(54) **BATTERY CELL, BATTERY, ELECTRICAL DEVICE, AND BATTERY CELL MANUFACTURING METHOD AND DEVICE**
BATTERIEZELLE, BATTERIE, ELEKTRISCHE VORRICHTUNG SOWIE VERFAHREN UND VORRICHTUNG ZUR HERSTELLUNG EINER BATTERIEZELLE
ÉLÉMENT DE BATTERIE, BATTERIE, APPAREIL ÉLECTRIQUE ET PROCÉDÉ ET DISPOSITIF DE FABRICATION D'ÉLÉMENT DE BATTERIE

(43) Date of publication of application: 24.04.2024
(73) Proprietor: Contemporary Amperex Technology (Hong Kong) Limited, Central, Central And Western District (HK)
(72) Inventor: ZHU, Wenqi, Ningde, Fujian 352000 (CN); WEN, Yuqian, Ningde, Fujian 352000 (CN); YANG, Rui, Ningde, Fujian 352000 (CN)
(74) Representative: Rowlands, Stuart Michael
(86) International application number: PCT/CN2021/125109
(87) International publication number: WO 2023/065188

(56) References cited:
- CN-A- 112 335 100
- CN-U- 205 069 784
- CN-U- 212 182 376
- JP-A- 2005 071 677
- JP-A- 2021 089 861
- JP-A- H0 973 885
- KR-A- 20180 028 768
- US-A1- 2015 236 331
- US-A1- 2017 187 019

## Description

### TECHNICAL FIELD

This application relates to the technical field of batteries, and in particular, to a battery cell, a battery, an electrical device, and a method and equipment for manufacturing a battery cell.

### BACKGROUND

Energy conservation and emission reduction are key to the sustainable development of the automobile industry. Electric vehicles have become an important part of the sustainable development of the automobile industry by virtue of their energy saving and eco-friendly advantages. Battery technology is crucial to development of electric vehicles.

During charge-and-discharge cycles of a battery, an internal pressure of the battery increases, thereby impairing the safety performance and lifespan of the battery.

US2017/187019A1 discloses a secondary battery including: an electrode assembly; a case accommodating the electrode assembly; and a cap assembly coupled to the case. The cap assembly includes: a cap-up exposed at a top of the cap assembly; a safety vent under the cap-up; and a reinforcement plate between the cap-up and the safety vent and extending along a periphery of the cap-up. The safety vent includes a protrusion protruding toward the electrode assembly and is electrically connected to the electrode assembly via the protrusion.

KR 20180028768A relates to a cap assembly for a secondary battery which comprises: a terminal unit protruding upwardly; a coupling unit formed on an outer circumference of the terminal unit and coupled to an opening of a can; and a top cap with a connection unit extending from the terminal unit to connect the coupling unit and the terminal unit. The cap assembly comprises a reinforcing unit having a reinforcing groove between the connection unit and the coupling unit wherein the reinforcing groove protrudes from the coupling unit downwardly and is opened upwardly. A gas discharging hole can be formed on an inner wall of the connection unit and the reinforcing unit.

### SUMMARY

This invention provides a battery cell according to claim 1, a battery according to claim 12, an electrical device according to claim 13, and a method for manufacturing a battery cell according to claim 14, and can solve a battery safety problem caused by an increased internal pressure during the use of the battery, and improve the lifespan of the battery. Other aspects of the invention are set out in the dependent claims.

According to a first aspect, this invention provides a battery cell, including:
a housing, having an opening; an end cap, configured to cover the opening and be connected to the housing with a crimped seam and an electrode terminal, disposed on the end cap. A reinforcing portion is disposed on the end cap. Said reinforcing portion is positionally staggered from the electrode terminal.

In the technical solution in an embodiment of this application, the reinforcing portion disposed on the end cap can increase the structural strength of the end cap, reduce the deformation of the end cap caused by an increased internal pressure during the use of the battery cell, and reduce the risk of failure of electrical connection between the electrode terminal and the electrode assembly, thereby effectively prolonging the lifespan of the battery cell and improving the safety performance of the battery cell. In addition, the projection of the electrode terminal on the end cap does not overlap the reinforcing part, thereby preventing the electrode terminal from being interfered with by the reinforcing portion, and facilitating the mounting of the electrode terminal onto the end cap.

According to the invention, the end cap includes an end cap body and a first hem portion. The first hem portion is formed around the end cap body. A second hem portion is formed at the opening of the housing. The first hem portion is connected to the second hem portion. Both the electrode terminal and the reinforcing portion are disposed on the end cap body. The reinforcing portion is located between the electrode terminal and the first hem portion along a radial direction of the end cap.

A region located between the electrode terminal and the first hem portion on the end cap is an easily deformable region. By disposing the reinforcing portion in the region between the electrode terminal and the first hem portion, the rigidity and strength of this region are enhanced effectively. In this way, the reinforcing portion neither interferes with the connection between the first hem portion and the second hem portion nor hinders a process of fitting the electrode terminal onto the end cap.

In some embodiments, the battery cell further includes a sealing element. The sealing element is disposed between the first hem portion and the second hem portion to hermetically connect the end cap and the housing.

The sealing element disposed between the first hem portion and the second hem portion ensures airtightness between the end cap and the housing, and prevents an electrolytic solution in the battery cell from leaking from between the first hem portion and the second hem portion.

According to the invention, the housing includes a housing body and a second hem portion. The second hem portion is connected to the housing body. The first hem portion and the second hem portion do not go beyond an outer surface of the housing body along a radial direction of the housing.

By making the first hem portion and the second hem portion not go beyond the outer surface of the housing body, two adjacent battery cells can fit closely with each other when a plurality of battery cells form a battery. A gap caused by protrusion of the first hem portion and the second hem portion of the battery cells is avoided between the two adjacent battery cells, thereby ensuring a relatively high energy density of the battery.

According to the invention, the housing further includes a transition portion. The second hem portion is connected to the housing body by the transition portion. The transition portion extends into the housing from the housing body toward the end cap along the radial direction of the housing. The second hem portion is curled outward from the housing, and the first hem portion wraps the second hem portion.

By extending the transition portion into the housing toward the end cap along the radial direction of the housing, the second hem portion is prevented from going beyond the outer surface of the housing body, thereby providing a sufficient space for the first hem portion, making the first hem portion not go beyond the outer surface of the housing body, and in turn, ensuring a relatively high energy density of the battery. By curling the second hem portion outward from the housing and wrapping the second hem portion with the first hem portion, the difficulty of seaming the end cap to the housing is reduced, and the manufacturing efficiency of the battery cell is improved.

According to the invention, the reinforcing portion extends along the radial direction of the end cap.

With the reinforcing portion configured to extend along the radial direction of the end cap, the difficulty of disposing the reinforcing portion onto the end cap is reduced, and the manufacturing efficiency of the end cap is improved. Also according to the invention, when a plurality of reinforcing portions are disposed on the end cap, because the reinforcing portions extend along the radial direction of the end cap, the plurality of reinforcing portions can fully utilize the available space on the end cap, and the plurality of reinforcing portions can be arranged on the end cap in an orderly and neat manner.

In some embodiments, the reinforcing portion is plural in number, and the plurality of reinforcing portions are distributed at intervals along a circumference of the end cap.

The plurality of reinforcing portions can jointly withstand the force exerted on the end cap, thereby effectively increasing the structural strength of the end cap, greatly reducing the deformation of the end cap caused by an increased internal pressure during the use of the battery cell, and in turn, effectively prolonging the lifespan of the battery cell and improving the safety performance of the battery cell.

In some embodiments, the reinforcing portion extends along a circumference of the end cap and is disposed around the electrode terminal.

With the reinforcing portion disposed circumferentially on the end cap, the available space on the end cap is fully utilized, thereby effectively increasing the structural strength of the end cap. The reinforcing portion disposed on the end cap can withstand the forces exerted on the end cap from all directions, thereby greatly reducing the deformation of the end cap caused by an increased internal pressure during the use of the battery cell, and in turn, effectively prolonging the lifespan of the battery cell and improving the safety performance of the battery cell.

In some embodiments, the end cap body includes a first wall, a second wall, and a third wall. The second wall encloses the first wall. The second wall extends from an edge of the first wall into the housing along an axial direction of the housing. The third wall encloses the second wall. The third wall extends along a radial direction of the housing from an end of the second wall, the end being away from the first wall. The third wall is connected to the second wall and the first hem portion. The electrode terminal is disposed on the first wall. The reinforcing portion is disposed on the third wall.

To facilitate the connection with a busbar component, the electrode terminal usually protrudes outward beyond the end cap. In the above technical solution, both the first hem portion and the first wall protrude outward beyond the third wall. By disposing the electrode terminal on the first wall, the electrode terminal can be raised to a higher level to prevent the first hem portion from interfering with the connection between the electrode terminal and the busbar component. In contrast to a circumstance in which the end cap body is a flat plate, the end cap body of the above structure can raise the electrode terminal to a higher level, and enable the electrode terminal to protrude beyond the first hem portion without increasing the axial length of the electrode terminal, thereby reducing the material cost of the electrode terminal, and in turn, effectively reducing the manufacturing cost of the battery cell.

In some embodiments, the second wall and the first wall close in to form an accommodation cavity. An electrode lead-out hole is made on the first wall. A part of the electrode terminal is located in the accommodation cavity, and another part of the electrode terminal is threaded out through the electrode lead-out hole.

The accommodation cavity defined by the second wall and the first wall can accommodate a part of the electrode terminal, leaving the electrode terminal not to occupy the space under the third wall. In addition, the accommodation cavity can accommodate an electrolytic solution, so that more electrolytic solution can be accommodated in the battery cell, thereby effectively increasing the energy density of the battery cell.

In some embodiments, the electrode terminal includes a terminal body, a first flange, and a second flange. The terminal body is threaded through the electrode lead-out hole. The first flange and the second flange protrude beyond an outer peripheral surface of the terminal body. The first flange is located on an inner side of the first wall and is at least partly accommodated in the accommodation cavity. The second flange is located on an outer side of the first wall. The first flange and the second flange jointly restrict the electrode terminal from moving along the axial direction of the housing.

The first flange and the second flange can ensure that the electrode terminal is stably mounted on the end cap.

In some embodiments, the battery cell further includes: an insulator, disposed between the electrode terminal and the end cap to insulate the electrode terminal from the end cap.

The insulator enables the electrode terminal to be insulated from the end cap, so as to avoid a short circuit of the battery cell, ensure safe charge-and-discharge cycling of the battery cell, and improve the safety performance of the battery cell.

In some embodiments, the insulator includes a first part and a second part. The first part is disposed between the second flange and the first wall. The second part extends from the first part along the axial direction of the housing and wraps an outer peripheral surface of the second flange.

By leaving the second part to wrap the outer peripheral surface of the second flange, an insulation distance between the end cap and the electrode terminal is increased, and a short circuit between the electrode terminal and the end cap is avoided, thereby ensuring safe charge-and-discharge cycling of the battery cell, and improving the safety performance of the battery cell.

In some embodiments, an end of the second part, away from the first part, goes beyond the first hem portion along the axial direction of the housing.

The part beyond the first hem portion in the second part can protect the electrode terminal and prevent the electrode terminal from being damaged during seaming between the end cap and the housing, thereby effectively prolonging the lifespan of the battery cell.

In some embodiments, the insulator includes a first part and a second part. The first part is disposed between the second flange and the first wall. The second part extends from the first part along the axial direction of the housing and wraps an outer peripheral surface of the second wall.

By leaving the second part to wrap the outer peripheral surface of the second wall, the insulation distance between the end cap and the electrode terminal is increased, and a short circuit of the battery cell avoided, thereby ensuring safe charge-and-discharge cycling of the battery cell, and improving the safety performance of the battery cell. In addition, by leaving the second part to wrap the outer peripheral surface of the second wall, the second part is prevented from interfering with the connection between the electrode terminal and the busbar component.

In some embodiments, an end of the second part, away from the first part, abuts on the reinforcing portion.

By leaving the second part to abut against the reinforcing portion, the insulator, the end cap, and the electrode terminal are fitted together stably. In addition, because the second part abuts against the reinforcing portion, the second part can provide support for the third wall of the end cap, thereby effectively reducing the deformation of the end cap caused by the increased internal pressure of the battery cell.

In some embodiments, the insulator includes a third part and a fourth part. The third part is disposed between the outer peripheral surface of the terminal body and a hole wall of the electrode lead-out hole. The fourth part is disposed between the first wall and the first flange and located in the accommodation cavity.

The third part and the fourth part are configured to insulate the electrode terminal from the end cap, and the fourth part is located in the accommodation cavity, thereby preventing the insulator from occupying the space under the third wall. In this way, more electrolytic solution can be accommodated inside the battery cell, thereby effectively increasing the energy density of the battery cell.

According to a second aspect, this application provides a battery, including the battery cell according to the invention.

According to a third aspect, this application provides an electrical device, including an electrical device body and the battery according to the invention. The battery is configured to supply electrical energy to the electrical device body.

According to a fourth aspect, this application provides a method for manufacturing a battery cell according to the invention, including: providing a housing, the housing having an opening; providing an end cap and an electrode terminal, where a reinforcing portion is disposed on the end cap, the electrode terminal is disposed on the end cap, and a projection of the electrode terminal on the end cap does not overlap the reinforcing portion; and covering the opening with the end cap and seaming the end cap to the housing.

According to a fifth aspect, this application provides a piece of equipment for manufacturing a battery cell, including: a first providing apparatus, a second providing apparatus, and an assembling apparatus. The first providing apparatus is configured to provide a housing. The housing has an opening. The second providing apparatus is configured to provide an end cap and an electrode terminal. A reinforcing portion is disposed on the end cap. The electrode terminal is disposed on the end cap. A projection of the electrode terminal on the end cap does not overlap the reinforcing portion. The assembling apparatus is configured to cover the opening with the end cap and seam the end cap to the housing.

The foregoing description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

### BRIEF DESCRIPTION OF DRAWINGS

To describe technical solutions in embodiments of this application more clearly, the following outlines the drawings to be used in the embodiments. Understandably, the following drawings show merely some embodiments of this application, and therefore, are not intended to limit the scope. A person of ordinary skill in the art may derive other related drawings from the drawings without making any creative efforts.
FIG. 1 is a schematic structural diagram of a vehicle according to some embodiments of this application;
FIG. 2 is a schematic exploded view of a battery according to some embodiments of this application.
FIG. 3 is a schematic structural diagram of a battery module shown in FIG. 2;
FIG. 4 is a schematic partial view of a battery cell according to some embodiments of this application;
FIG. 5 is a partial cross-sectional view of a battery cell according to some embodiments of this application;
FIG. 6 is a three-dimensional diagram of an end cap and an electrode terminal according to the invention;
FIG. 7 is a schematic diagram of a reinforcing portion according to some embodiments of this application;
FIG. 8 is a schematic diagram of a reinforcing portion according to some other embodiments of this application;
FIG. 9 is a close-up view of a part IX shown in FIG. 5;
FIG. 10 is a top view of an end cap according to the invention;
FIG. 11 is a cross-sectional view of an end cap according to some embodiments of this application;
FIG. 12 is a cross-sectional view of an electrode terminal according to some embodiments of this application;
FIG. 13 is a schematic diagram of an insulator and an end cap according to some embodiments of this application;
FIG. 14 is a schematic diagram of an insulator and an end cap according to some embodiments of this application;
FIG. 15 is a schematic flowchart of a method for manufacturing a battery cell according to some embodiments of this application; and
FIG. 16 is a schematic block diagram of equipment for manufacturing a battery cell according to some embodiments of this application.

List of reference numerals: 1000-vehicle; 200-controller; 300-motor; 100-battery; 5-box; 5a-first box portion; 5b-second box portion; 5c-accommodation space; 6-battery module; 10-battery cell; 20-housing; 21-opening; 22-second hem portion; 23-housing body; 24-transition portion; 30-end cap; 31-reinforcing portion; 32-end cap body; 33-first hem portion; 34-first wall; 35-second wall; 36-third wall; 37-accommodation cavity; 38-electrode lead-out hole; 40-electrode terminal; 41-terminal body; 42-first flange; 43-second flange; 50-electrode assembly; 51-tab; 61-first part; 62-second part; 63-third part; 64-fourth part; 70-current collection component; 2000-first providing apparatus; 2100-second providing apparatus; 2200-assembling apparatus.

### DETAILED DESCRIPTION OF EMBODIMENTS

To make the objectives, technical solutions, and advantages of the embodiments of this application clearer, the following gives a clear description of the technical solutions in some embodiments of this application with reference to the drawings in some embodiments of this application. It will be apparent that the described embodiments are merely a part rather than all of the embodiments of this application.

Unless otherwise defined, all technical and scientific terms used herein have the same meanings as what is normally understood by a person skilled in the technical field of this application. The terms used in the specification of this application are merely intended to describe specific embodiments but not intended to limit this application. The terms "include" and "contain" and any variations thereof used in the specification, claims, and brief description of drawings of this application are intended as non-exclusive inclusion. The terms such as "first" and "second" used in the specification, claims, and brief description of drawings herein are intended to distinguish between different items, but are not intended to describe a specific sequence or order of precedence.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments.

In the description of this application, unless otherwise expressly specified and defined, the terms "mount", "concatenate", "connect", and "attach" are understood in a broad sense. For example, a "connection" may be a fixed connection, a detachable connection, or an integrated connection; or may be a direct connection or an indirect connection implemented through an intermediary; or may be internal communication between two components. A person of ordinary skill in the art is able to understand the specific meanings of the terms in this application according to specific situations.

The term "and/or" in this application indicates merely a relation for describing the related items, and represents three possible relationships. For example, "A and/or B" may represent the following three circumstances: A alone, both A and B, and B alone. In addition, the character "/" herein generally indicates an "or" relationship between the item preceding the character and the item following the character.

In embodiments of this application, the same reference numeral denotes the same component. For brevity, detailed descriptions of the same component are omitted in a different embodiment. Understandably, dimensions such as thickness, length, and width of various components in the embodiments of this application shown in the drawings, and dimensions such as overall thickness, length, and width of an integrated device are merely illustrative descriptions, but do not constitute any limitation on this application.

"A plurality of" referred to in this application means two or more (including two).

In this application, a battery cell may include a lithium-ion secondary battery cell, a lithium-ion primary battery cell, a lithium-sulfur battery cell, a sodium-lithium-ion battery cell, a sodium-ion battery cell, a magnesium-ion battery cell, or the like. The embodiments of this application do not limit the type of the battery cell.

The battery mentioned in embodiments of this application means a unitary physical module that includes one or more battery cells to provide a higher voltage and a higher capacity. For example, the battery mentioned in this application may include a battery module, a battery pack, or the like. A battery typically includes a box configured to package one or more battery cells. The box prevents liquid or other foreign matters from affecting the charging or discharging of the battery cells.

A battery cell includes an electrode assembly and an electrolytic solution. The electrode assembly includes a positive electrode plate, a negative electrode plate, and a separator. The battery cell works primarily by shuttling metal ions between the positive electrode plate and the negative electrode plate. The positive electrode plate includes a positive current collector and a positive active material layer. The positive active material layer overlays a surface of the positive current collector. The positive current collector includes a positive current collection portion and a positive tab. The positive current collection portion is coated with a positive active material layer, and the positive tab is not coated with the positive active material layer. Using a lithium-ion battery as an example, the positive current collector may be made of aluminum. The positive active material layer includes a positive active material. The positive active material may be lithium cobalt oxide, lithium iron phosphate, ternary lithium, lithium manganese oxide, or the like. The negative electrode plate includes a negative current collector and a negative active material layer. The negative active material layer is applied onto a surface of the negative current collector. The negative current collector includes a negative current collection portion and a negative tab. The negative current collection portion is coated with a negative active material layer, and the negative tab is not coated with the negative active material layer. The negative current collector may be made of copper. The negative active material layer includes a negative active material. The negative active material may be carbon, silicon, or the like. The separator may be made of a material such as polypropylene (PP) or polyethylene (PE).

The battery cell further includes a housing and an end cap. The housing is configured to accommodate the electrode assembly. The housing has an opening. The end cap covers the opening. An electrode lead-out hole configured to mounting the electrode terminal is made on the end cap. The electrode terminal is electrically connected to tabs of the electrode assembly by the current collection component to implement charging and discharging of the electrode assembly. The electrode lead-out hole is usually made at the middle of the end cap. Correspondingly, the electrode terminal is mounted at the middle of the end cap.

The market trend now shows that electric vehicles have become an important part of sustainable development of the automotive industry. A battery provides energy for the running of the vehicle body and the operation of various electrical components in the vehicle body.

Currently, welding and seaming are two typical methods of connection between the end cap and the housing of a battery cell. Compared with welding, seaming is widely used by virtue of high processing efficiency. However, the battery cell that employs a seaming process in the prior art is prone to the problem of a short lifespan caused by failure of internal electrical connection of the battery cell.

The applicant hereof has found through research that a reason for the above problem is: in order to facilitate seaming at the edge of the end cap, the end cap is relatively thin at the edge, and the structural strength at the edge is relatively low. After the battery cell is charged and discharged many times, an electrolytic solution in the battery cell decomposes to generate gas. Therefore, the internal air pressure increases, and the battery cell expands in volume, and the end cap of low structural strength is deformed considerably under a force (for example, the end cap is raised upward under a force). Consequently, the electrode terminal is displaced, and in turn, relative displacement occurs between the electrode terminal and the current collection component and/or between the current collection component and the electrode assembly, thereby resulting in a risk of failure of electrical connection between the electrode terminal and the electrode assembly, and in turn, impairing the safety performance and lifespan of the battery.

In view of the above considerations, in order to solve the problems of low safety and a short lifespan of the battery, the applicant has designed a battery cell through in-depth research. In the battery cell, a reinforcing portion is disposed on an end cap to increase the structural strength of the end cap, reduce the deformation of the end cap caused by an increased internal pressure during the use of the battery cell, and reduce the risk of failure of electrical connection between the electrode terminal and the electrode assembly, thereby effectively prolonging the lifespan of the battery cell and improving the safety performance of the battery cell.

The technical solutions described in this embodiment of this application are applicable to a battery and an electrical device that uses the battery.

The electrical device may be a vehicle, a mobile phone, a portable device, a notebook computer, a ship, a spacecraft, an electric toy, a power tool, or the like. The vehicle may be an oil-fueled vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, such as a game console, an electric car toy, an electric ship toy, an electric airplane toy, and the like. The power tool includes an electrical metal cutting tool, an electrical grinding tool, an electrical assembling tool, and a power tool for use in railways. Examples of the power tool are an electrical drill, an electrical grinder, an electrical wrench, an electrical screwdriver, an electrical hammer, an electrical impact drill, a concrete vibrator, an electrical planer, and the like. The electrical device is not particularly limited in this embodiment of this application.

For ease of description in the following embodiments, a vehicle is used as an example of the electrical device.

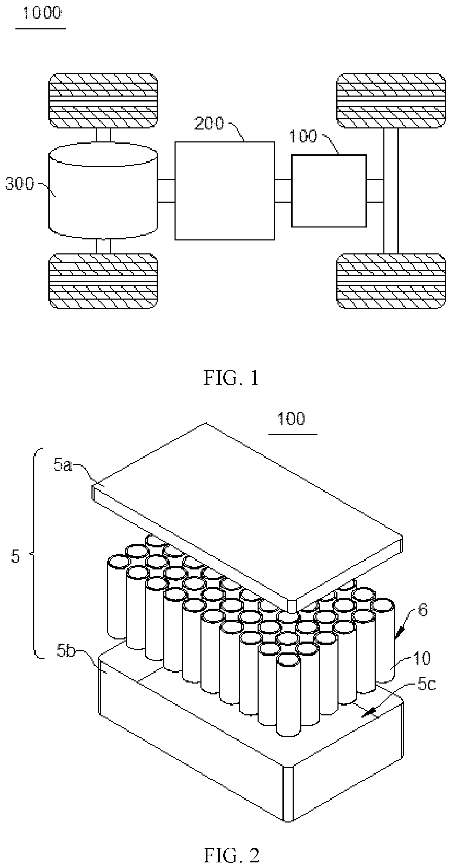

FIG. 1 is a schematic structural diagram of a vehicle according to some embodiments of this application.

A controller 200, a motor 300, and a battery 100 may be disposed inside the vehicle 1000. The controller 200 is configured to control the battery 100 to supply power to the motor 300. For example, the battery 100 may be disposed at the bottom, front, or rear of the vehicle 1000. The battery 100 may be configured to supply power to the vehicle. For example, the battery 100 may serve as an operating power supply of the vehicle 1000 to power a circuit system of the vehicle 1000. For example, the battery may be configured to meet operating power usage requirements of the vehicle 1000 that is being started, navigated, or running. In another embodiment of this application, the battery 100 serves not only as an operating power supply of the vehicle 1000, but may also serve as a driving power supply of the vehicle 1000 to provide driving power for the vehicle 1000 in place of or partly in place of fuel oil or natural gas.

FIG. 2 is a schematic exploded view of a battery 100 according to some embodiments of this application. As shown in FIG. 2, the battery 100 includes a box 5 and a battery cell 10. The battery cell 10 is accommodated in the box 5.

The box 5 is configured to accommodate the battery cell 10. The box 5 may be one of various structures. In some embodiments, the box 5 may include a first box portion 5a and a second box portion 5b. The first box portion 5a and the second box portion 5b fit and cover each other. The first box portion 5a and the second box portion 5b together define an accommodation space 5c configured to accommodate the battery cell 10. The second box portion 5b may be a hollowed-out structure that is opened at one end. The first box portion 5a is a plate-shaped structure. The first box portion 5a fits and covers the opening of the second box portion 5b to form the box 5 that includes the accommodation space 5c. The first box portion 5a and the second box portion 5b each may be a hollowed-out structure that is opened at one end. The opening of the first box portion 5a fits the opening of the second box portion 5b, so as to form the box 5 with the accommodation space 5c. Definitely, the first box portion 5a and the second box portion 5b may be in various shapes, such as a cylinder or cuboid.

To improve airtightness between the first box portion 5a and the second box portion 5b that are connected, a sealing structure such as a sealant or a sealing ring may be disposed between the first box portion 5a and the second box portion 5b.

Assuming that the first box portion 5a fits on the top of the second box portion 5b, the first box portion 5a may also be referred to as an upper box, and the second box portion 5b may also be referred to as a lower box.

There may be one or more battery cells 10 in the battery 100. If there are a plurality of battery cells 10, the plurality of battery cells may be connected in series, parallel, or series-and-parallel pattern. The series-and-parallel pattern means a combination of series connection and parallel connection of the plurality of battery cells. The plurality of battery cells 10 may be directly connected in series, parallel, or series-and-parallel pattern, and then the whole of the plurality of battery cells 10 may be accommodated in the box 5. Alternatively, the plurality of battery cells 10 may be connected in series, parallel, or series-and-parallel pattern to form a battery module 6 first. A plurality of battery modules 6 are then connected in series, parallel, or series-and-parallel pattern to form a whole for being accommodated in the box 5.

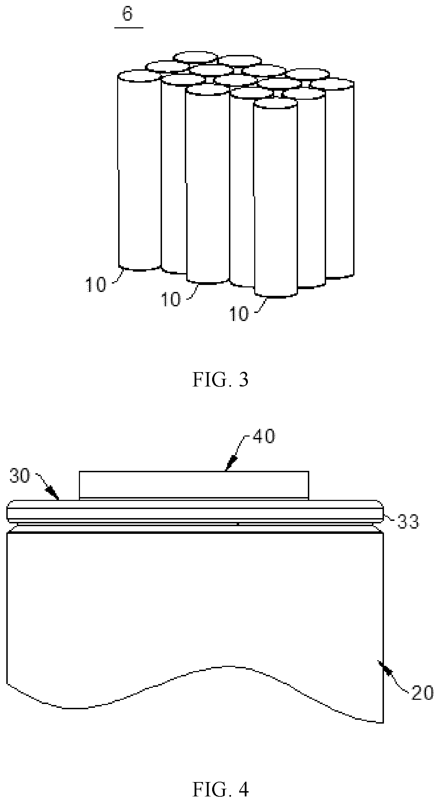

FIG. 3 is a schematic structural diagram of a battery module 6 shown in FIG. 2. In some embodiments, as shown in FIG. 3, there are a plurality of battery cells 10. A battery module 6 includes a plurality of battery cells 10 that are connected in series, parallel, or series-and-parallel pattern. A plurality of battery modules 6 are connected in series, parallel, or series-and-parallel pattern to form an entirety that is disposed in a box 5 to form a battery 100. The plurality of battery cells 10 in the battery module 6 may be electrically connected by a busbar component (not shown in the drawing), so as to implement parallel, series, or series-and-parallel connection between the plurality of battery cells 10 in the battery module 6. There may be one or more busbar components. Each busbar component is configured to electrically connect at least two battery cells 10.

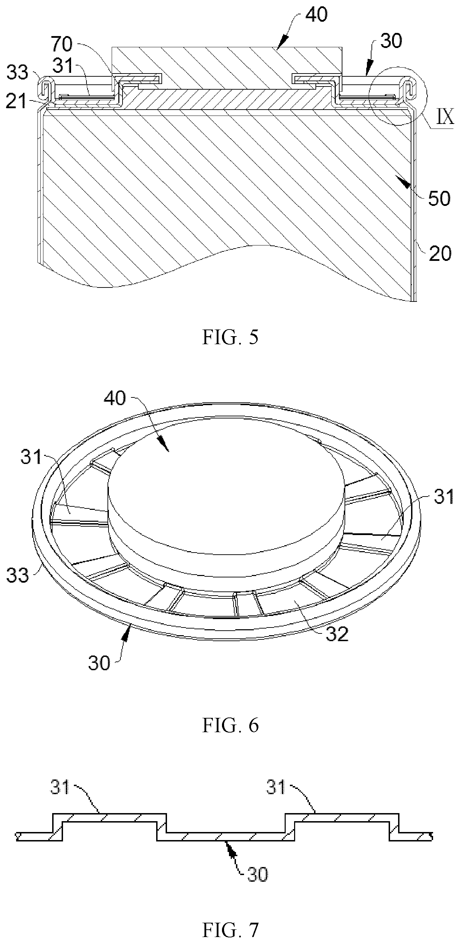

According to some embodiments of this application, referring to FIG. 4 to FIG. 6, FIG. 4 is a schematic partial view of a battery cell 10 according to some embodiments of this application, FIG. 5 is a partial cross-sectional view of a battery cell 10 according to some embodiments of this application, and FIG. 6 is a three-dimensional diagram of an end cap 30 and an electrode terminal 40 according to some embodiments of the invention. This application provides a battery cell 10. The battery cell 10 includes a housing 20, an end cap 30, and an electrode terminal 40. An opening 21 is made on the housing 20. The end cap 30 covers the opening 21 and is seamed to the housing 20. The electrode terminal 40 is disposed on the end cap 30. A reinforcing portion 31 is disposed on the end cap 30 (the reinforcing portion 31 is not shown in FIG. 3). A projection of the electrode terminal 40 on the end cap 30 does not overlap the reinforcing portion 31.

The housing 20 may be a component configured to accommodate the electrode assembly 50 and an electrolytic solution and provide support for the end cap 30. The electrode assembly 50 can be put into the housing 20 through the opening 21 of the housing 20.

The end cap 30 may be of a structure that covers the opening 21 of the housing 20. The end cap 30 seals the opening 21 of the housing 20 so that the electrode assembly 50 and the electrolytic solution are in a hermetic environment. In addition, the end cap 30 is a structure connected to the electrode terminal 40 so that the electrode terminal 40 is stably electrically connected to the electrode assembly 50 by a current collection component 70. The current collection component 70 is a structure capable of electrically connecting the electrode terminal 40 and the electrode assembly 50. For example, the current collection component 70 may be a current collection plate that electrically connects a tab 51 of the electrode assembly 50 and an electrode terminal 40.

The electrode terminal 40 is a structure configured to be connected to a busbar component to implement charging and discharging of the battery cell 10. The battery cell 10 is connected to another battery cell 10 by the busbar component. A plurality of battery cells 10 are connected in parallel, series, or series-and-parallel pattern to form a battery module.

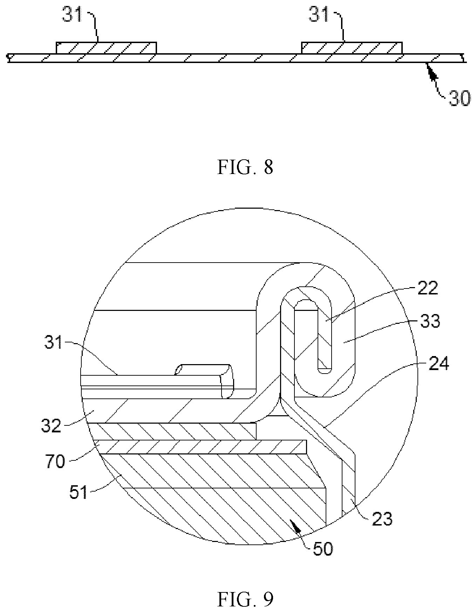

The reinforcing portion 31 is a component capable of enhancing the structural strength of the end cap 30. The reinforcing portion 31 may be disposed on the end cap 30 by a process including but not limited to stamping and one-piece formation. Referring to FIG. 7, FIG. 7 is a schematic diagram of a reinforcing portion 31 according to some embodiments of this application. In FIG. 7, a surface of the end cap 30 is stamped so that the stamped portion of the end cap 30 is raised to form the reinforcing portion 31. The reinforcing portion 31 disposed in this way ensures a light weight and a low manufacturing cost of the end cap 30. Alternatively, the reinforcing portion 31 may be disposed on the end cap 30 by other means. Referring to FIG. 8, FIG. 8 is a schematic diagram of a reinforcing portion 31 according to some other embodiments of this application. In FIG. 8, the reinforcing portion 31 is disposed on the surface of the end cap 30. The reinforcing portion 31 may be connected to the end cap 30 by a process including but not limited to welding and bonding.

"A projection of the electrode terminal 40 on the end cap 30 does not overlap the reinforcing portion 31" means that the projection of the electrode terminal 40 on the end cap 30 does not overlap the reinforcing portion 31 along an axial direction of the housing 20. That is, the reinforcing portion 31 is positionally staggered from the electrode terminal 40 so that the reinforcing portion 31 does not interfere with the electrode terminal 40, thereby facilitating the mounting of the electrode terminal 40 onto the end cap 30.

The reinforcing portion 31 disposed on the end cap 30 can increase the structural strength of the end cap 30, reduce the deformation of the end cap 30 caused by an increased internal pressure during the use of the battery cell 10, ensure stability of connection between the electrode terminal 40 and the electrode assembly 50, and reduce the risk of failure of electrical connection between the electrode terminal 40 and the electrode assembly 50, thereby effectively prolonging the lifespan of the battery cell 10 and improving the safety performance of the battery cell 10.

According to some embodiments of this application, the end cap 30 includes an end cap body 32 and a first hem portion 33. The first hem portion 33 is formed around the end cap body 32. A second hem portion 22 is formed at the opening 21 of the housing 20. The first hem portion 33 is connected to the second hem portion 22. Both the electrode terminal 40 and the reinforcing portion 31 are disposed on the end cap body 32. The reinforcing portion 31 is located between the electrode terminal 40 and the first hem portion 33 along a radial direction of the end cap 30.

The end cap body 32 is a component connected to the first hem portion 33. The reinforcing portion 31 and the electrode terminal 40 are disposed on the end cap body 32, and are also components that withstand the force generated by the increased internal pressure of the battery cell 10. The structural strength is increased by the reinforcing portion 31.

The first hem portion 33 is formed on the edge of the end cap body 32 and is disposed around the end cap body 32, and is configured to be connected to the second hem portion 22 to implement a seaming connection between the end cap 30 and the housing 20.

The second hem portion 22 is formed at the opening 21 of the housing 20. When the first hem portion 33 is connected to the second hem portion 22, the end cap body 32 and the electrode terminal 40 can cover the opening 21 of the housing 20.

"The radial direction of the end cap 30" means a direction perpendicular to a central axis of the housing 20.

A region located between the electrode terminal 40 and the first hem portion 33 on the end cap 30 is an easily deformable region. By disposing the reinforcing portion 31 in the region between the electrode terminal 40 and the first hem portion 33, the rigidity and strength of this region are enhanced effectively. In this way, the reinforcing portion 31 neither interferes with the connection between the first hem portion 33 and the second hem portion 22 nor hinders a process of fitting the electrode terminal 40 onto the end cap.

According to some embodiments of this application, the battery cell 10 further includes a sealing element (not shown in the drawing). The sealing element is disposed between the first hem portion 33 and the second hem portion 22 to hermetically connect the end cap 30 and the housing 20.

The sealing element is a structure capable of sealing, for example, a sealant, a gasket, or a sealing strip. The sealing element is disposed between the first hem portion 33 and the second hem portion 22 to implement mutual sealing between the first hem portion 33 and the second hem portion 22 and serve a function of sealing. In this way, the electrolytic solution in the housing 20 or other substances in the housing 20 such as the gas generated by charging and discharging can be prevented from leaking out of the battery cell 10 from the space between the first hem portion 33 and the second hem portion 22, and the substances outside the battery cell 10 can be prevented from entering the battery cell 10 from the space between the first hem portion 33 and the second hem portion 22.

The sealing element disposed between the first hem portion 33 and the second hem portion 22 ensures airtightness between the end cap 30 and the housing 20, and prevents the electrolytic solution in the battery cell 10 from leaking from between the first hem portion 33 and the second hem portion 22.

According to some embodiments of this application, the housing 20 includes a housing body 23 and a second hem portion 22. The second hem portion 22 is connected to the housing body 23. The first hem portion 33 and the second hem portion 22 do not go beyond an outer surface of the housing body 23 along a radial direction of the housing 20.

The housing body 23 may be a component configured to accommodate the electrode assembly 50. The second hem portion 22 is a component connected to the first hem portion 33.

"The first hem portion 33 and the second hem portion 22 do not go beyond an outer surface of the housing body 23" means: on a plane perpendicular to the axial direction of the housing 20, projections of the first hem portion 33 and the second hem portion 22 are covered by a projection of the housing body 23. This includes two circumstances. One circumstance is: when the first hem portion 33 is located outside in comparison with the second hem portion 22 (the first hem portion 33 is closer to the housing body 23 than the second hem portion 22), the first hem portion 33 does not go beyond the outer surface of the housing body 23 (including a case in which the first hem portion 33 is flush with the outer surface of the housing body 23). The other circumstance is: when the second hem portion 22 is located outside in comparison with the first hem portion 33 (the second hem portion 22 is closer to the housing body 23 than the first hem portion 33), the second hem portion 22 does not go beyond the outer surface of the housing body 23 (including a case in which the second hem portion 22 is flush with the outer surface of the housing body 23).

By making the first hem portion 33 and the second hem portion 22 not go beyond the outer surface of the housing body 23, two adjacent battery cells 10 can fit closely with each other when a plurality of battery cells 10 form a battery. A gap caused by protrusion of the first hem portion 33 and the second hem portion 22 of the battery cells is avoided between the two adjacent battery cells 10, thereby ensuring a relatively high energy density of the battery.

According to some embodiments of this application, referring to FIG. 9, FIG. 9 is a close-up view of a part IX shown in FIG. 5. The housing 20 further includes a transition portion 24. The second hem portion 22 is connected to the housing body 23 by the transition portion 24. The transition portion 24 extends into the housing 20 from the housing body 23 toward the end cap 30 along the radial direction of the housing 20. The second hem portion 22 is curled outward from the housing 20. The first hem portion 33 wraps the second hem portion 22.

The transition portion 24 is a structure that connects the second hem portion 22 and the housing body 23. Determining factors of the position of the second hem portion 22 relative to the housing body 23 may include the extension direction of the transition portion 24. The transition portion 24 may be a beveled face or an arc face which, in each case, extends toward the interior of the housing 20, so that the second hem portion 22 does not go beyond the outer peripheral surface of the housing body 23 in the radial direction of the housing 20.

By extending the transition portion 24 into the housing 20 toward the end cap 30 along the radial direction of the housing 20, the second hem portion 22 is prevented from going beyond the outer surface of the housing body 23, thereby providing a sufficient space for the first hem portion 33, making the first hem portion 33 not go beyond the outer surface of the housing body 23, and in turn, ensuring a relatively high energy density of the battery. By curling the second hem portion 22 outward from the housing 20 and wrapping the second hem portion 22 with the first hem portion 33, the difficulty of seaming the end cap 30 to the housing 20 is reduced, and the manufacturing efficiency of the battery cell 10 is improved.

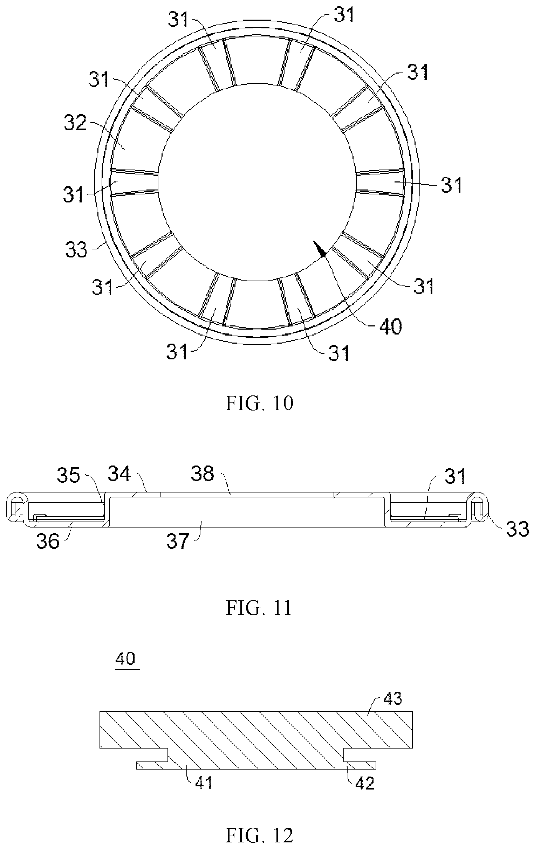

According to some embodiments of this application, referring to FIG. 10, FIG. 10 is a top view of an end cap 30 according to some embodiments of this application. The reinforcing portion 31 extends along the radial direction of the end cap 30.

In some embodiments of this application, the shape of the reinforcing portion 31 is not limited, and may be other shapes such as a strip, a block, a cylinder, or a polyhedron.

With the reinforcing portion 31 configured to extend along the radial direction of the end cap 30, the difficulty of disposing the reinforcing portion 31 onto the end cap 30, such as the difficulty of a stamping process, is reduced, and the manufacturing efficiency of the end cap 30 is improved. In addition, when a plurality of reinforcing portions 31 are disposed on the end cap 30, because the reinforcing portions 31 extend along the radial direction of the end cap 30, the plurality of reinforcing portions 31 can fully utilize the available space on the end cap 30, and the plurality of reinforcing portions 31 can be arranged on the end cap 30 in an orderly and neat manner.

According to some embodiments of this application, the reinforcing portion 31 is plural in number, and the plurality of reinforcing portions 31 are distributed at intervals along a circumference of the end cap 30.

The plurality of reinforcing portions 31 may be evenly distributed or unevenly distributed in the axial direction of the end cap 30. The number of reinforcing portions 31 is not limited, and may be one, two, three, four, five, or the like. In FIG. 10, the number of the reinforcing portions 31 is ten.

The plurality of reinforcing portions 31 can jointly withstand the force exerted on the end cap 30, thereby effectively increasing the structural strength of the end cap 30, greatly reducing the deformation of the end cap 30 caused by an increased internal pressure during the use of the battery cell 10, and in turn, effectively prolonging the lifespan of the battery cell 10 and improving the safety performance of the battery cell 10.

According to some embodiments of this application, the reinforcing portion 31 extends along a circumference of the end cap 30 and is disposed around the electrode terminal 40.

The reinforcing portion 31 is disposed circumferentially on the end cap 30 around the electrode terminal 40. The shape of the cross-section of the reinforcing portion 31 is not particularly limited, and may be triangular, quadrangular, pentagonal, quasi-circular, or irregularly shaped. The inside diameter and the outside diameter of the reinforcing portion 31 are not particularly limited, as long as the reinforcing portion 31 is located between the first hem portion 33 and the electrode terminal. In addition, the number of reinforcing portions 31 is not limited. The reinforcing portion may be a single reinforcing portion 31, double reinforcing portion 31, triple reinforcing portion 31, quadruple reinforcing portion 31, or the like.

With the reinforcing portion 31 disposed circumferentially on the end cap 30, the available space on the end cap 30 is fully utilized, thereby effectively increasing the structural strength of the end cap 30. The reinforcing portion 31 disposed on the end cap 30 can withstand the forces exerted on the end cap 30 from all directions, thereby greatly reducing the deformation of the end cap 30 caused by an increased internal pressure during the use of the battery cell 10, and in turn, effectively prolonging the lifespan of the battery cell 10 and improving the safety performance of the battery cell 10.

According to some embodiments of this application, referring to FIG. 11, FIG. 11 is a cross-sectional view of an end cap 30 according to some embodiments of this application. The end cap body 32 includes a first wall 34, a second wall 35, and a third wall 36. The second wall 35 encloses the first wall 34. The second wall 35 extends from an edge of the first wall 34 into the housing 20 along an axial direction of the housing 20. The third wall 36 encloses the second wall 35. The third wall 36 extends along a radial direction of the housing 20 from an end of the second wall 35, the end being away from the first wall 34. The third wall 36 is connected to the second wall 35 and the first hem portion 33. The electrode terminal 40 is disposed on the first wall 34. The reinforcing portion 31 is disposed on the third wall 36.

The first wall 34 protrudes beyond the third wall 36 away from the interior of the housing 20, and is connected to the third wall 36 by the second wall 35. The first wall 34 is a component that provides support for the electrode terminal 40. The second wall 35 is a component that connects the first wall 34 and the third wall 36. A first hem portion 33 is formed on the edge of the third wall 36 so as to get connected to the second hem portion 22 of the housing 20. The first wall 34, the second wall 35, the third wall 36, and the electrode terminal 40 can cover the opening 21 of the housing 20, so that the electrode assembly 50 and the electrolytic solution are sealed inside the housing 20.

The second wall 35 may extend along the axial direction of the housing 20 or a direction other than the axial direction of the housing 20, so long as the second wall can connect the first wall 34 and the third wall 36 and can seal up the clearance between the first wall 34 and the third wall 36 in the axial direction of the housing 20.

To facilitate the connection with a busbar component, the electrode terminal 40 usually protrudes outward beyond the end cap 30. In the above technical solution, both the first hem portion 33 and the first wall 34 protrude outward beyond the third wall 36. By disposing the electrode terminal 40 on the first wall 34, the electrode terminal 40 can be raised to a higher level to prevent the first hem portion 33 from interfering with the connection between the electrode terminal 40 and the busbar component. In contrast to a circumstance in which the end cap body 32 is a flat plate, the end cap body 32 of the above structure can raise the electrode terminal 40 to a higher level, and enable the electrode terminal 40 to protrude beyond the first hem portion 33 without increasing the axial length of the electrode terminal 40, thereby reducing the material cost of the electrode terminal 40, and in turn, effectively reducing the manufacturing cost of the battery cell 10.

According to some embodiments of this application, the second wall 35 and the first wall 34 close in to form an accommodation cavity 37. An electrode lead-out hole 38 is made on the first wall 34. A part of the electrode terminal 40 is located in the accommodation cavity 37, and another part of the electrode terminal 40 is threaded out through the electrode lead-out hole 38.

The accommodation cavity 37 may be a spatial structure configured to accommodate a part of the electrode terminal 40 and the electrolytic solution.

The electrode lead-out hole 38 may be a hole made on the first wall 34. The electrode terminal 40 is threaded out through the hole so that the electrode terminal 40 is connected to the busbar component.

The accommodation cavity 37 defined by the second wall 35 and the first wall 34 can accommodate a part of the electrode terminal 40, leaving the electrode terminal 40 not to occupy the space under the third wall 36. In addition, the accommodation cavity 37 can accommodate the electrolytic solution, so that more electrolytic solution can be accommodated in the battery cell 10, thereby effectively increasing the energy density of the battery cell 10.

According to some embodiments of this application, referring to FIG. 12, FIG. 12 is a cross-sectional view of an electrode terminal 40 according to some embodiments of this application. The electrode terminal 40 includes a terminal body 41, a first flange 42, and a second flange 43. The terminal body 41 is threaded through the electrode lead-out hole 38. The first flange 42 and the second flange 43 protrude beyond an outer peripheral surface of the terminal body 41. The first flange 42 is located on an inner side of the first wall 34 and is at least partly accommodated in the accommodation cavity 37. The second flange 43 is located on an outer side of the first wall 34. The first flange 42 and the second flange 43 jointly restrict the electrode terminal 40 from moving along the axial direction of the housing 20.

The terminal body 41 may be a component that connects the first flange 42 and the second flange 43. The terminal body 41, the first flange 42, and the second flange 43 are electrically connected to each other. The first flange 42 and the second flange 43 radially protrude from two ends of the terminal body 41 respectively. The first flange 42 and the second flange 43 are configured to restrict the electrode terminal 40 from moving along the axial direction of the housing 20, corresponding to an inner side and an outer side of the first wall 34 respectively. The electrode terminal 40 is riveted onto the end cap 30. The terminal body 41 may be configured to be connected to an internal circuit structure of the battery cell 10. For example, the terminal body 41 may be connected to a current collection component 70 of the battery cell 10. The second flange 43 may be configured to be connected to a busbar component.

The first flange 42 and the second flange 43 can ensure that the electrode terminal 40 is stably mounted on the end cap 30.

According to some embodiments of this application, the battery cell 10 further includes: an insulator, disposed between the electrode terminal 40 and the end cap 30 to insulate the electrode terminal 40 from the end cap 30.

The insulator is made of an insulative material, such as plastic or rubber. The insulator is configured to insulate the electrode terminal 40 from the end cap 30, so as to avoid a short-circuit of the battery cell 10 caused by electrical connection between the electrode terminal 40 and the end cap 30.

The insulator may be characterized by thinness, so as to ensure a relatively high energy density of the battery cell 10 on the basis of insulating the electrode terminal 40 from the end cap 30, but without affecting the volume or size of the battery cell 10.

The insulator enables the electrode terminal 40 to be insulated from the end cap 30, so as to avoid a short circuit of the battery cell 10, ensure safe charge-and-discharge cycling of the battery cell 10, and improve the safety performance of the battery cell.

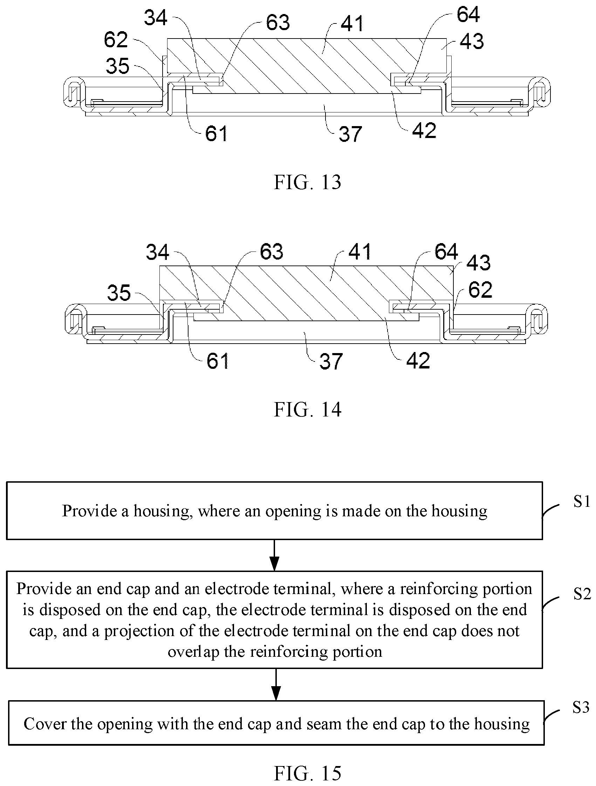

According to some embodiments of this application, referring to FIG. 13, FIG. 13 is a schematic diagram of an insulator and an end cap 30 according to some embodiments of this application. The insulator includes a first part 61 and a second part 62. The first part 61 is disposed between the second flange 43 and the first wall 34. The second part 62 extends from the first part 61 along the axial direction of the housing 20 and wraps an outer peripheral surface of the second flange 43.

The first part 61 insulates the second flange 43 from the first wall 34. The second part 62 insulates the part that wraps the outer peripheral surface of the second flange 43.

By leaving the second part 62 to wrap the outer peripheral surface of the second flange 43, the insulation distance between the end cap 30 and the electrode terminal 40 is increased, and a short circuit of the battery cell 10 avoided, thereby ensuring safe charge-and-discharge cycling of the battery cell 10, and improving the safety performance of the battery cell.

According to some embodiments of this application, an end of the second part 62, away from the first part 61, goes beyond the first hem portion 33 along the axial direction of the housing 20.

Along the axial direction of the housing 20, the second flange 43 of the electrode terminal 40 goes beyond the first hem portion 33 so as to get connected to the busbar component. The second part 62 extends away from the interior of the housing 20, covers and encloses the second flange 43, and goes beyond the first hem portion 33, but is not higher than the second flange 43.

The part beyond the first hem portion 33 in the second part 62 can protect the electrode terminal 40 and prevents the electrode terminal 40 from being damaged during seaming between the end cap 30 and the housing 20, thereby effectively prolonging the lifespan of the battery cell 10.

According to some embodiments of this application, referring to FIG. 14, FIG. 14 is a schematic diagram of an insulator and an end cap 30 according to some other embodiments of this application. The insulator includes a first part 61 and a second part 62. The first part 61 is disposed between the second flange 43 and the first wall 34. The second part 62 extends from the first part 61 along the axial direction of the housing 20 and wraps an outer peripheral surface of the second wall 35.

By leaving the second part 62 to wrap the outer peripheral surface of the second wall 35, the insulation distance between the end cap 30 and the electrode terminal 40 is increased, and a short circuit of the battery cell 10 avoided, thereby ensuring safe charge-and-discharge cycling of the battery cell 10, and improving the safety performance of the battery cell 10. In addition, by leaving the second part 62 to wrap the outer peripheral surface of the second wall 35, the second part 62 is prevented from interfering with the connection between the electrode terminal 40 and the busbar component. In addition, by leaving the second part 62 to wrap the outer peripheral surface of the second wall 35 and making the outer surface of the second part 62 be flush with the outer surface of the second flange 43, the second part 62 is caused not to occupy the space between the electrode terminal 40 and the edge of the end cap 30, thereby ensuring a sufficient marking space reserved on the battery cell 10. The marking space means a space for marking the end cap 30 to display information about the battery cell 10.

According to some embodiments of this application, an end of the second part 62, away from the first part 61, abuts on the reinforcing portion 31.

The second part 62 extends toward the interior of the housing 20 along the axial direction of the housing 20 until abutting on the surface of the reinforcing portion 31.

By leaving the second part 62 to abut against the reinforcing portion 31, the insulator, the end cap 30, and the electrode terminal 40 are fitted together stably. In addition, because the second part 62 abuts against the reinforcing portion 31, the second part 62 can provide support for the third wall 36 of the end cap 30, thereby effectively reducing the deformation of the end cap 30 caused by the increased internal pressure of the battery cell 10.

According to some embodiments of this application, the insulator includes a third part 63 and a fourth part 64. The third part 63 is disposed between the outer peripheral surface of the terminal body 41 and a hole wall of the electrode lead-out hole 38. The fourth part 64 is disposed between the first wall 34 and the first flange 42 and located in the accommodation cavity 37.

The insulator may be an upper insulator or a lower insulator. The upper insulator may be configured to insulate the electrode terminal 40 from an upper surface of the end cap 30. The lower insulator may be configured to insulate the electrode terminal 40 from a lower surface of the end cap 30. The third part 63 and the fourth part 64 may be included in the lower insulator. The first part 61 and the second part 62 may be included in the upper insulator.

The third part 63 is configured to insulate the outer peripheral surface of the terminal body 41 from the electrode lead-out hole 38. The fourth part 64 is configured to insulate the first flange 42 from the first wall 34.

The third part 63 and the fourth part 64 are configured to insulate the electrode terminal 40 from the end cap 30, and the fourth part 64 is located in the accommodation cavity 37, thereby preventing the insulator from occupying the space under the third wall 36. In this way, more electrolytic solution can be accommodated inside the battery cell 10, thereby effectively increasing the energy density of the battery cell 10.

According to some embodiments of this application, an embodiment of this application further provides a battery. The battery includes the battery cell 10 disclosed in any one of the foregoing technical solutions. There may be one or more battery cells 10 in the battery. If there are a plurality of battery cells 10, the plurality of battery cells 10 are connected in series, parallel, or series-and-parallel pattern.

According to some embodiments of this application, an embodiment of this application further provides an electrical device, including an electrical device body and the battery according to the preceding technical solution. The battery is configured to supply electrical energy to the electrical device body.

According to some embodiments of this application, an embodiment of this application further provides a method for manufacturing a battery cell 10. Referring to FIG. 15, FIG. 15 is a schematic flowchart of a method for manufacturing a battery cell 10 according to some embodiments of this application.

The method for manufacturing a battery cell 10 includes the following steps:
S1: Provide a housing 20, where an opening 21 is made on the housing 20.
S2: Provide an end cap 30 and an electrode terminal 40, where a reinforcing portion 31 is disposed on the end cap 30, the electrode terminal 40 is disposed on the end cap 30, and a projection of the electrode terminal 40 on the end cap 30 does not overlap the reinforcing portion 31.
S3: Cover the opening 21 with the end cap 30 and seam the end cap to the housing 20.

It is hereby noted that, for the related structure of the battery cell 10 manufactured by the foregoing method for manufacturing a battery cell 10, reference may be made to the descriptions of the battery cell 10 provided in each embodiment described above. For example, the method for manufacturing a battery cell 10 further includes: providing a sealing element, and disposing the sealing element between the first hem portion 33 of the end cap 30 and the second hem portion 22 of the housing 20.

In assembling a battery cell 10 based on the foregoing method for manufacturing a battery cell 10, the foregoing steps are not necessarily performed in sequence. In other words, the steps may be performed in the order mentioned in an embodiment described above, or the steps may be performed in order different from the order mentioned in the embodiment, or several steps may be performed concurrently. For example, step S1 and step S2 are not necessarily performed sequentially, but may be performed concurrently.

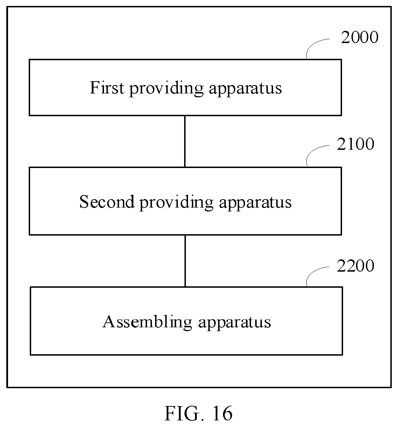

According to some embodiments of this application, an embodiment of this application further provides a piece of equipment for manufacturing a battery cell 10. Referring to FIG. 16, FIG. 16 is a schematic block diagram of equipment for manufacturing a battery cell 10 according to some embodiments of this application.

The equipment for manufacturing a battery cell 10 includes: a first providing apparatus 2000, a second providing apparatus 2100, and an assembling apparatus 2200. The first providing apparatus 2000 is configured to provide a housing 20. An opening 21 is made on the housing 20. The second providing apparatus 2100 is configured to provide an end cap 30 and an electrode terminal 40. A reinforcing portion 31 is disposed on the end cap 30. The electrode terminal 40 is disposed on the end cap 30. A projection of the electrode terminal 40 on the end cap 30 does not overlap the reinforcing portion 31. The assembling apparatus 2200 is configured to cover the opening 21 with the end cap 30 and seam the end cap to the housing 20.

According to some embodiments of this application, referring to FIG. 4 to FIG. 14, the battery cell 10 includes a housing 20, an electrode assembly 50, an end cap 30, and an electrode terminal 40. An opening 21 is made on the housing 20. The electrode assembly 50 is disposed in the housing 20. The housing 20 includes a housing body 23, a second hem portion 22, and a transition portion 24. The second hem portion 22 is connected to an edge of the opening 21 of the housing body 23 by the transition portion 24. The second hem portion 22 is curled outward from the housing 20. The end cap 30 includes an end cap body 32 and a first hem portion 33. According to the invention, the first hem portion 33 is curled outward from the housing 20 along an axial direction of the housing 20. The end cap 30 covers the corresponding opening 21 and is connected to the housing 20 through a seam connection between the first hem portion 33 and the second hem portion 22. In order to ensure airtightness of the connection, a sealing element may be disposed between the first hem portion 33 and the second hem portion 22.

A reinforcing portion 31 is disposed on the end cap body 32. The reinforcing portion 31 is disposed between the first hem portion 33 and the electrode terminal 40 in a radial direction of the end cap 30. The reinforcing portion 31 extends along the radial direction of the end cap 30. A plurality of reinforcing portions 31 are distributed at intervals along a circumference of the end cap 30, so that the plurality of reinforcing portions 31 are radially arranged on the end cap body 32 around the center of end cap 30 in an outward radial direction, thereby effectively increasing the structural strength of the end cap 30, greatly reducing the deformation of the end cap 30 caused by an increased internal pressure during the use of the battery cell 10, and in turn, effectively prolonging the lifespan of the battery cell 10 and improving the safety performance of the battery cell 10.

The end cap body 32 includes a first wall 34, a second wall 35, and a third wall 36. The first wall 34 and the second wall 35 form a central bulge of the end cap 30. The central bulge may form an accommodation cavity 37 configured to accommodate more electrolytic solution. An electrode lead-out hole 38 is formed on a surface of the central bulge. The electrode terminal 40 is threaded out through the electrode lead-out hole 38. The electrode terminal 40 is riveted onto the end cap 30. The electrode terminal 40 includes a terminal body 41, a first flange 42, and a second flange 43. The first flange 42 is located on the inner side of the central bulge and located in the accommodation cavity 37. The second flange 43 is located on an outer side of the central bulge and is configured to be connected to a busbar component. The terminal body 41 is threaded through the central lead-out hole. The terminal body 41 may be connected to the electrode assembly 50 by a current collection plate. A lower insulator is disposed between the first flange 42 and the inner side of the end cap body 32. An upper insulator is disposed between the second flange 43 and the outer side of the end cap body 32. The electrode terminal 40 is insulated from the end cap 30 by the upper insulator and the lower insulator. An edge of the upper insulator may be folded down to form the second part 62 described above. In this way, the second part 62 wraps the outer peripheral surface of the second wall 35 and is flush with the outer surface of the second flange 43, so as to increase the marking space of the battery cell 10. The third part 63 and the fourth part 64 are included in the lower insulator, and the fourth part 64 is located in the accommodation cavity 37, thereby preventing the insulator from occupying the space under the third wall 36. In this way, more electrolytic solution can be accommodated inside the battery cell 10, thereby effectively increasing the energy density of the battery cell 10.

What is described above is merely exemplary embodiments of this application. To a person skilled in the art, various modifications and variations may be made to this application.

## Claims

1. A battery cell (10), comprising:
a housing (20), on which an opening (21) is made;
an end cap (30), configured to cover the opening (21) and be connected to the housing with a crimped seam; and
an electrode terminal (40), disposed on the end cap (30), wherein
a reinforcing portion (31) is disposed on the end cap (30), and the reinforcing portion (31) is positionally staggered from the electrode terminal (40);
wherein the end cap (30) comprises an end cap body (32) and a first hem portion (33), the first hem portion (33) is formed around the end cap body (32), a second hem portion (22) is formed at the opening (21) of the housing (20), and the first hem portion (33) is connected to the second hem portion (22); and
both the electrode terminal (40) and the reinforcing portion (31) are disposed on the end cap body (32), and the reinforcing portion (31) is located between the electrode terminal (40) and the first hem portion (33) along a radial direction of the end cap (30);
wherein the housing (20) comprises a housing body (23) and a second hem portion (22), and the second hem portion (22) is connected to the housing body (23); and
the first hem portion (33) and the second hem portion (22) do not go beyond an outer surface of the housing body (23) along a radial direction of the housing (20);
wherein the housing (20) further comprises a transition portion (24), the second hem portion (22) is connected to the housing body (23) by the transition portion (24), the transition portion (24) extends into the housing (20) from the housing body (23) toward the end cap (30) along the radial direction of the housing (20), **characterized in that** the second hem portion (22) is curled outward from the housing (20), the first hem portion (33) is curled outward from the housing (20) along an axial direction of the housing (20), and the first hem portion (33) wraps the second hem portion (22);wherein the reinforcing portion (31) extends along the radial direction of the end cap (30);
and wherein the reinforcing portion (31) is plural in number, and the plurality of reinforcing portions (31) are distributed at intervals along a circumference of the end cap (30).

2. The battery cell (10) according to claim 1, wherein
the battery cell (10) further comprises a sealing element, and the sealing element is disposed between the first hem portion (33) and the second hem portion (22) to hermetically connect the end cap (30) and the housing (20).

3. The battery cell (10) according to any one of claims 1 to 2, wherein the end cap body (32) comprises a first wall (34), a second wall (35), and a third wall (36); the second wall (35) encloses the first wall (34); the second wall (35) extends from an edge of the first wall (34) into the housing (20) along an axial direction of the housing (20); the third wall (36) encloses the second wall (35); the third wall (36) extends along a radial direction of the housing (20) from an end of the second wall (35), the end being away from the first wall (34); the third wall (36) is connected to the second wall (35) and the first hem portion (33); the electrode terminal (40) is disposed on the first wall (34); and the reinforcing portion (31) is disposed on the third wall (36).

4. The battery cell (10) according to claim 3, wherein the second wall (35) and the first wall (34) close in to form an accommodation cavity (37), and an electrode lead-out hole (38) is made on the first wall (34); and
a part of the electrode terminal (40) is located in the accommodation cavity (37), and another part of the electrode terminal (40) is threaded out through the electrode lead-out hole (38).

5. The battery cell (10) according to claim 4, wherein
the electrode terminal (40) comprises a terminal body (41), a first flange (42), and a second flange (43); the terminal body (41) is threaded through the electrode lead-out hole (38); the first flange (42) and the second flange (43) protrude beyond an outer peripheral surface of the terminal body (41); the first flange (42) is located on an inner side of the first wall (34) and is at least partly accommodated in the accommodation cavity (37); the second flange (43) is located on an outer side of the first wall (34); and the first flange (42) and the second flange (43) jointly restrict the electrode terminal (40) from moving along the axial direction of the housing (20).

6. The battery cell (10) according to claim 5, wherein the battery cell (10) further comprises:
an insulator, disposed between the electrode terminal (40) and the end cap (30) to insulate the electrode terminal (40) from the end cap (30).

7. The battery cell (10) according to claim 6, wherein the insulator comprises a first part and a second part; and
the first part is disposed between the second flange (43) and the first wall (34), and the second part extends from the first part along the axial direction of the housing (20) and wraps an outer peripheral surface of the second flange (43);

8. The battery cell (10) according to claim 7, wherein
an end of the second part, away from the first part, goes beyond the first hem portion (33) along the axial direction of the housing (20).

9. The battery cell (10) according to claim 7 or 8, wherein
the insulator comprises a first part and a second part; and
the first part is disposed between the second flange (43) and the first wall (34), and the second part extends from the first part along the axial direction of the housing (20) and wraps an outer peripheral surface of the second wall (35).

10. The battery cell (10) according to claim 9, wherein
an end of the second part, away from the first part, abuts on the reinforcing portion (31).

11. The battery cell (10) according to any one of claims 6 to 10, wherein
the insulator comprises a third part and a fourth part, the third part is disposed between the outer peripheral surface of the terminal body (41) and a hole wall of the electrode lead-out hole (38), and the fourth part is disposed between the first wall (34) and the first flange (42) and located in the accommodation cavity (37).

12. A battery (100), wherein the battery (100) comprises the battery cell (10) according to any one of claims 1 to 11.

13. An electrical device, wherein the electrical device comprises:
an electrical device body; and
the battery (100) according to claim 12, wherein the battery (100) is configured to provide electrical energy to the electrical device body.

14. A method for manufacturing a battery cell (10), wherein the method comprises:
providing a housing (20), wherein an opening (21) is made on the housing (20);
providing an end cap (30) and an electrode terminal (40), wherein a reinforcing portion (31) is disposed on the end cap (30), the electrode terminal (40) is disposed on the end cap (30), and a projection of the electrode terminal (40) on the end cap (30) does not overlap the reinforcing portion (31); and
covering the opening (21) with the end cap (30) and connecting the end cap (30) to the housing (20) with a crimp seam;
wherein the end cap (30) comprises an end cap body (32) and a first hem portion (33), the first hem portion (33) is formed around the end cap body (32), a second hem portion (22) is formed at the opening (21) of the housing (20), and the first hem portion (33) is connected to the second hem portion (22); and
both the electrode terminal (40) and the reinforcing portion (31) are disposed on the end cap body (32), and the reinforcing portion (31) is located between the electrode terminal (40) and the first hem portion (33) along a radial direction of the end cap (30);
wherein the housing (20) comprises a housing body (23) and a second hem portion (22), and the second hem portion (22) is connected to the housing body (23); and
the first hem portion (33) and the second hem portion (22) do not go beyond an outer surface of the housing body (23) along a radial direction of the housing (20);
wherein the housing (20) further comprises a transition portion (24), the second hem portion (22) is connected to the housing body (23) by the transition portion (24), the transition portion (24) extends into the housing (20) from the housing body (23) toward the end cap (30) along the radial direction of the housing (20), the second hem portion (22) is curled outward from the housing (20), and the first hem portion (33) wraps the second hem portion (22);
wherein the reinforcing portion (31) extends along the radial direction of the end cap (30);
and wherein the reinforcing portion (31) is plural in number, and the plurality of reinforcing portions (31) are distributed at intervals along a circumference of the end cap (30).

## Patentansprüche

1. Batteriezelle (10), umfassend:
ein Gehäuse (20), an dem eine Öffnung (21) ausgebildet ist;
eine Endkappe (30), die konfiguriert ist, um die Öffnung (21) abzudecken und mit dem Gehäuse mittels einer gecrimpten Naht verbunden zu werden; und
einen Elektrodenanschluss (40), der an der Endkappe (30) angeordnet ist, wobei
ein Verstärkungsabschnitt (31) an der Endkappe (30) angeordnet ist und der Verstärkungsabschnitt (31) gegenüber dem Elektrodenanschluss (40) versetzt positioniert ist;
wobei die Endkappe (30) einen Endkappenkörper (32) und einen ersten Saumabschnitt (33) umfasst, der erste Saumabschnitt (33) um den Endkappenkörper (32) herum gebildet ist, ein zweiter Saumabschnitt (22) an der Öffnung (21) des Gehäuses (20) gebildet ist und der erste Saumabschnitt (33) mit dem zweiten Saumabschnitt (22) verbunden ist; und
sowohl der Elektrodenanschluss (40) als auch der Verstärkungsabschnitt (31) am Endkappenkörper (32) angeordnet sind und der Verstärkungsabschnitt (31) sich entlang einer radialen Richtung der Endkappe (30) zwischen dem Elektrodenanschluss (40) und dem ersten Saumabschnitt (33) befindet;
wobei das Gehäuse (20) einen Gehäusekörper (23) und einen zweiten Saumabschnitt (22) umfasst, und der zweite Saumabschnitt (22) mit dem Gehäusekörper (23) verbunden ist; und
der erste Saumabschnitt (33) und der zweite Saumabschnitt (22) nicht über eine Außenoberfläche des Gehäusekörpers (23) entlang einer radialen Richtung des Gehäuses (20) hinausgehen;
wobei das Gehäuse (20) ferner einen Übergangsabschnitt (24) umfasst, der zweite Saumabschnitt (22) mit dem Gehäusekörper (23) durch den Übergangsabschnitt (24) verbunden ist, der Übergangsabschnitt (24) sich in das Gehäuse (20) von dem Gehäusekörper (23) in Richtung der Endkappe (30) entlang der radialen Richtung des Gehäuses (20) erstreckt, **dadurch gekennzeichnet, dass** der zweite Saumabschnitt (22) von dem Gehäuse (20) nach außen gerollt ist, der erste Saumabschnitt (33) von dem Gehäuse (20) entlang einer axialen Richtung des Gehäuses (20) nach außen gerollt ist, und der erste Saumabschnitt (33) den zweiten Saumabschnitt (22) umhüllt; wobei der Verstärkungsabschnitt (31) sich entlang der radialen Richtung der Endkappe (30) erstreckt;
und wobei der Verstärkungsabschnitt (31) eine Mehrzahl ist und die Vielzahl von Verstärkungsabschnitten (31) in Abständen entlang eines Umfangs der Endkappe (30) verteilt sind.

2. Batteriezelle (10) nach Anspruch 1, wobei
die Batteriezelle (10) ferner ein Dichtungselement umfasst, und das Dichtungselement zwischen dem ersten Saumabschnitt (33) und dem zweiten Saumabschnitt (22) angeordnet ist, um die Endkappe (30) und das Gehäuse (20) hermetisch zu verbinden.

3. Batteriezelle (10) nach einem der Ansprüche 1 bis 2, wobei der Endkappenkörper (32) eine erste Wand (34), eine zweite Wand (35) und eine dritte Wand (36) umfasst; die zweite Wand (35) die erste Wand (34) umschließt; die zweite Wand (35) sich von einem Rand der ersten Wand (34) in das Gehäuse (20) entlang einer axialen Richtung des Gehäuses (20) erstreckt; die dritte Wand (36) die zweite Wand (35) umschließt; die dritte Wand (36) sich entlang einer radialen Richtung des Gehäuses (20) von einem Ende der zweiten Wand (35) aus erstreckt, wobei das Ende von der ersten Wand (34) entfernt ist; die dritte Wand (36) mit der zweiten Wand (35) und dem ersten Saumabschnitt (33) verbunden ist; der Elektrodenanschluss (40) an der ersten Wand (34) angeordnet ist; und der Verstärkungsabschnitt (31) an der dritten Wand (36) angeordnet ist.

4. Batteriezelle (10) nach Anspruch 3, wobei die zweite Wand (35) und die erste Wand (34) sich schließen, um einen Aufnahmehohlraum (37) zu bilden, und ein Elektrodenherausführungsloch (38) an der ersten Wand (34) ausgebildet ist; und
ein Teil des Elektrodenanschlusses (40) sich in dem Aufnahmehohlraum (37) befindet, und ein anderer Teil des Elektrodenanschlusses (40) durch das Elektrodenherausführungsloch (38) herausgeführt ist.

5. Batteriezelle (10) nach Anspruch 4,
wobei der Elektrodenanschluss (40) einen Anschlusskörper (41), einen ersten Flansch (42) und einen zweiten Flansch (43) umfasst; der Anschlusskörper (41) durch das Elektrodenherausführungsloch (38) geführt ist; der erste Flansch (42) und der zweite Flansch (43) über eine Außenumfangsoberfläche des Anschlusskörpers (41) hinausragen; der erste Flansch (42) sich an einer Innenseite der ersten Wand (34) befindet und mindestens teilweise in dem Aufnahmehohlraum (37) untergebracht ist; der zweite Flansch (43) sich an einer Außenseite der ersten Wand (34) befindet; und
der erste Flansch (42) und der zweite Flansch (43) gemeinsam den Elektrodenanschluss (40) daran hindern, sich entlang der axialen Richtung des Gehäuses (20) zu bewegen.

6. Batteriezelle (10) nach Anspruch 5, wobei die Batteriezelle (10) ferner umfasst:
einen Isolator, der zwischen dem Elektrodenanschluss (40) und der Endkappe (30) angeordnet ist, um den Elektrodenanschluss (40) von der Endkappe (30) zu isolieren.

7. Batteriezelle (10) nach Anspruch 6, wobei der Isolator einen ersten Teil und einen zweiten Teil umfasst; und
der erste Teil zwischen dem zweiten Flansch (43) und der ersten Wand (34) angeordnet ist, und
der zweite Teil sich von dem ersten Teil entlang der axialen Richtung des Gehäuses (20) erstreckt und eine Außenumfangsoberfläche des zweiten Flansches (43) umhüllt.

8. Batteriezelle (10) nach Anspruch 7, wobei
ein Ende des zweiten Teils, das von dem ersten Teil entfernt ist, über den ersten Saumabschnitt (33) entlang der axialen Richtung des Gehäuses (20) hinausgeht.

9. Batteriezelle (10) nach Anspruch 7 oder 8, wobei
der Isolator einen ersten Teil und einen zweiten Teil umfasst; und
der erste Teil zwischen dem zweiten Flansch (43) und der ersten Wand (34) angeordnet ist, und der zweite Teil sich von dem ersten Teil entlang der axialen Richtung des Gehäuses (20) erstreckt und eine Außenumfangsoberfläche der zweiten Wand (35) umhüllt.

10. Batteriezelle (10) nach Anspruch 9, wobei
ein Ende des zweiten Teils, das vom ersten Teil entfernt ist, an dem Verstärkungsabschnitt (31) anliegt.

11. Batteriezelle (10) nach einem der Ansprüche 6 bis 10, wobei
der Isolator einen dritten Teil und einen vierten Teil umfasst, wobei der dritte Teil zwischen der Außenumfangsoberfläche des Anschlusskörpers (41) und einer Lochwand des Elektrodenherausführungslochs (38) angeordnet ist, und der vierte Teil zwischen der ersten Wand (34) und dem ersten Flansch (42) angeordnet ist und sich in dem Aufnahmehohlraum (37) befindet.

12. Batterie (100), wobei die Batterie (100) die Batteriezelle (10) nach einem der Ansprüche 1 bis 11 umfasst.

13. Elektrische Vorrichtung, wobei die elektrische Vorrichtung umfasst:
einen elektrischen Vorrichtungskörper; und
die Batterie (100) nach Anspruch 12, wobei die Batterie (100) konfiguriert ist, um elektrische Energie für den elektrischen Vorrichtungskörper bereitzustellen.

14. Verfahren zum Herstellen einer Batteriezelle (10), wobei das Verfahren umfasst:
Bereitstellen eines Gehäuses (20), wobei eine Öffnung (21) an dem Gehäuse (20) ausgebildet ist;
Bereitstellen einer Endkappe (30) und eines Elektrodenanschlusses (40), wobei ein Verstärkungsabschnitt (31) an der Endkappe (30) angeordnet ist, der Elektrodenanschluss (40) an der Endkappe (30) angeordnet ist und ein Vorsprung des Elektrodenanschlusses (40) an der Endkappe (30) den Verstärkungsabschnitt (31) nicht überlappt; und
Abdecken der Öffnung (21) mit der Endkappe (30) und Verbinden der Endkappe (30) mit dem Gehäuse (20) mit einer Crimpnaht;
wobei die Endkappe (30) einen Endkappenkörper (32) und einen ersten Saumabschnitt (33) umfasst, der erste Saumabschnitt (33) um den Endkappenkörper (32) herum gebildet ist, ein zweiter Saumabschnitt (22) an der Öffnung (21) des Gehäuses (20) gebildet ist und der erste Saumabschnitt (33) mit dem zweiten Saumabschnitt (22) verbunden ist; und
sowohl der Elektrodenanschluss (40) als auch der Verstärkungsabschnitt (31) am Endkappenkörper (32) angeordnet sind und der Verstärkungsabschnitt (31) sich entlang einer radialen Richtung der Endkappe (30) zwischen dem Elektrodenanschluss (40) und dem ersten Saumabschnitt (33) befindet;
wobei das Gehäuse (20) einen Gehäusekörper (23) und einen zweiten Saumabschnitt (22) umfasst, und der zweite Saumabschnitt (22) mit dem Gehäusekörper (23) verbunden ist; und
der erste Saumabschnitt (33) und der zweite Saumabschnitt (22) nicht über eine Außenoberfläche des Gehäusekörpers (23) entlang einer radialen Richtung des Gehäuses (20) hinausgehen;
wobei das Gehäuse (20) ferner einen Übergangsabschnitt (24) umfasst, der zweite Saumabschnitt (22) mit dem Gehäusekörper (23) durch den Übergangsabschnitt (24) verbunden ist, der Übergangsabschnitt (24) sich in das Gehäuse (20) von dem Gehäusekörper (23) in Richtung der Endkappe (30) entlang der radialen Richtung des Gehäuses (20) erstreckt, der zweite Saumabschnitt (22) von dem Gehäuse (20) nach außen gerollt ist, und der erste Saumabschnitt (33) den zweiten Saumabschnitt (22) umhüllt;
wobei der Verstärkungsabschnitt (31) sich entlang der radialen Richtung der Endkappe (30) erstreckt;
und wobei der Verstärkungsabschnitt (31) eine Mehrzahl ist und die Vielzahl von Verstärkungsabschnitten (31) in Abständen entlang eines Umfangs der Endkappe (30) verteilt sind.

## Revendications

1. Cellule de batterie (10), comprenant :
un logement (20), sur lequel une ouverture (21) est ménagée ;
un capuchon d'extrémité (30), conçu pour couvrir l'ouverture (21) et être raccordé au logement par un joint serti ; et
une borne d'électrode (40), disposée sur le capuchon d'extrémité (30), dans laquelle
une partie de renforcement (31) est disposée sur le capuchon d'extrémité (30), et la position de la partie de renforcement (31) est décalée par rapport à la borne d'électrode (40) ;
le capuchon d'extrémité (30) comprenant un corps de capuchon d'extrémité (32) et une première partie ourlet (33), la première partie ourlet (33) étant formée autour du corps de capuchon d'extrémité (32), une deuxième partie ourlet (22) étant formée au niveau de l'ouverture (21) du logement (20), et la première partie ourlet (33) étant raccordée à la deuxième partie ourlet (22) ; et
la borne d'électrode (40) et la partie de renforcement (31) étant toutes deux disposées sur le corps de capuchon d'extrémité (32), et la partie de renforcement (31) étant située entre la borne d'électrode (40) et la première partie ourlet (33) le long d'une direction radiale du capuchon d'extrémité (30) ;
le logement (20) comprenant un corps de logement (23) et une deuxième partie ourlet (22), et la deuxième partie ourlet (22) étant raccordée au corps de logement (23) ; et
la première partie ourlet (33) et la deuxième partie ourlet (22) ne s'étendant pas au-delà d'une surface externe du corps de logement (23) le long d'une direction radiale du logement (20) ;
le logement (20) comprenant en outre une partie de transition (24), la deuxième partie ourlet (22) étant raccordée au corps de logement (23) par une partie de transition (24), la partie de transition (24) s'étendant dans le logement (20) depuis le corps de logement (23) en direction du capuchon d'extrémité (30) le long de la direction radiale du logement (20), **caractérisée en ce que** la deuxième partie ourlet (22) est enroulée vers l'extérieur par rapport au logement (20), la première partie ourlet (33) est enroulée vers l'extérieur par rapport au logement (20) le long d'une direction axiale du logement (20), et la première partie ourlet (33) enveloppe la deuxième partie ourlet (22) ; la partie de renforcement (31) s'étendant le long de la direction radiale du capuchon d'extrémité (30) ;
et la partie de renforcement (31) étant présente en plusieurs exemplaires, et la pluralité de parties de renforcement (31) étant distribuées à des intervalles le long d'une circonférence du capuchon d'extrémité (30).

2. Cellule de batterie (10) selon la revendication 1, dans laquelle
la cellule de batterie (10) comprend en outre un élément d'étanchéité, et l'élément d'étanchéité est disposé entre la première partie ourlet (33) et la deuxième partie ourlet (22) pour raccorder hermétiquement le capuchon d'extrémité (30) et le logement (20).

3. Cellule de batterie (10) selon l'une quelconque des revendications 1 à 2, dans laquelle le capuchon d'extrémité (32) comprend une première paroi (34), une deuxième paroi (35) et une troisième paroi (36) ; la deuxième paroi (35) enferme la première paroi (34) ; la deuxième paroi (35) s'étend depuis un bord de la première paroi (34) dans le logement (20) le long d'une direction axiale du logement (20) ; la troisième paroi (36) enferme la deuxième paroi (35) ; la troisième paroi (36) s'étend le long d'une direction radiale du logement (20) depuis une extrémité de la deuxième paroi (35), l'extrémité étant éloignée de la première paroi (34) ; la troisième paroi (36) est raccordée à la deuxième paroi (35) et la première partie ourlet (33) ; la borne d'électrode (40) est disposée sur la première paroi (34) ; et la partie de renforcement (31) est disposée sur la troisième paroi (36).

4. Cellule de batterie (10) selon la revendication 3, dans laquelle la deuxième paroi (35) et la première paroi (34) se rapprochent pour former une cavité de réception (37), et un trou de sortie de conducteur d'électrode (38) est ménagé sur la première paroi (34) ; et
une partie de la borne d'électrode (40) est située dans la cavité de réception (37), et une autre partie de la borne d'électrode (40) est enfilée par le trou de sortie de conducteur d'électrode (38).

5. Cellule de batterie (10) selon la revendication 4, dans laquelle
la borne d'électrode (40) comprend un corps de borne (41), une première bride (42), et une deuxième bride (43) ; le corps de borne (41) est enfilé dans le trou de sortie de conducteur d'électrode (38) ; la première bride (42) et la deuxième bride (43) dépassent au-delà d'une surface périphérique externe du corps d'électrode (41) ; la première bride (42) est située sur un côté interne de la première paroi (34) et est au moins en partie reçue dans la cavité de réception (37) ; la deuxième bride (43) est située sur un côté externe de la première paroi (34) ; et la première bride (42) et la deuxième bride (43) restreignent conjointement un mouvement de la borne d'électrode (40) le long de la direction axiale du logement (20).

6. Cellule de batterie (10) selon la revendication 5, la cellule de batterie (10) comprenant en outre :
un isolateur, disposé entre la borne d'électrode (40) et le capuchon d'extrémité (30) pour isoler la borne d'électrode (40) du capuchon d'extrémité (30).

7. Cellule de batterie (10) selon la revendication 6, dans laquelle l'isolateur comprend une première partie et une deuxième partie ; et
la première partie est disposée entre la deuxième bride (43) et la première paroi (34), et la deuxième partie s'étend depuis la première partie le long de la direction axiale du logement (20) et enveloppe une surface périphérique externe de la deuxième bride (43).

8. Cellule de batterie (10) selon la revendication 7, dans laquelle
une extrémité de la deuxième partie, éloignée de la première partie, va au-delà de la première partie ourlet (33) le long de la direction axiale du logement (20).

9. Cellule de batterie (10) selon la revendication 7 ou 8, dans laquelle
l'isolateur comprend une première partie et une deuxième partie ; et
la première partie est disposée entre la deuxième bride (43) et la première paroi (34), et la deuxième partie s'étend depuis la première partie le long de la direction axiale du logement (20) et enveloppe une surface périphérique externe de la deuxième paroi (35).

10. Cellule de batterie (10) selon la revendication 9, dans laquelle
une extrémité de la deuxième partie, éloignée de la première partie, vient en butée sur la partie de renforcement (31).

11. Cellule de batterie (10) selon l'une quelconque des revendications 6 à 10, dans laquelle
l'isolateur comprend une troisième partie et une quatrième partie, la troisième partie est disposée entre la surface périphérique externe du corps de borne (41) et une paroi de trou du trou de sortie de conducteur d'électrode (38), et la quatrième partie est disposée entre la première paroi (34) et la première bride (42) et située dans la cavité de réception (37).

12. Batterie (100), la batterie (100) comprenant la cellule de batterie (10) selon l'une quelconque des revendications 1 à 11.

13. Dispositif électrique, le dispositif électrique comprenant :
un corps de dispositif électrique ; et
la batterie (100) selon la revendication 12, la batterie (100) étant conçue pour fournir de l'énergie électrique au corps de dispositif électrique.

14. Procédé de fabrication d'une cellule de batterie (10), le procédé comprenant les étapes consistant à :
fournir un logement (20), une ouverture (21) étant ménagée sur le logement (20) ;
fournir un capuchon d'extrémité (30) et une borne d'électrode (40), une partie de renforcement (31) étant disposée sur le capuchon d'extrémité (30), la borne d'électrode (40) étant disposée sur le capuchon d'extrémité (30), et une projection de la borne d'électrode (40) sur le capuchon d'extrémité (30) ne chevauchant pas la partie de renforcement (31) ; et
couvrir l'ouverture (21) avec le capuchon d'extrémité (30) et raccorder le capuchon d'extrémité (30) au logement (20) à l'aide d'un joint serti ;
le capuchon d'extrémité (30) comprenant un corps de capuchon d'extrémité (32) et une première partie ourlet (33), la première partie ourlet (33) étant formée autour du corps de capuchon d'extrémité (32), une deuxième partie ourlet (22) étant formée au niveau de l'ouverture (21) du logement (20), et la première partie ourlet (33) étant raccordée à la deuxième partie ourlet (22) ; et
la borne d'électrode (40) et la partie de renforcement (31) sont toutes deux disposées sur le corps de capuchon d'extrémité (32), et la partie de renforcement (31) est située entre la borne d'électrode (40) et la première partie ourlet (33) le long d'une direction radiale du capuchon d'extrémité (30) ;
le logement (20) comprenant un corps de logement (23) et une deuxième partie ourlet (22), et la deuxième partie ourlet (22) étant raccordée au corps de logement (23) ; et
la première partie ourlet (33) et la deuxième partie ourlet (22) ne s'étendant pas au-delà d'une surface externe du corps de logement (23) le long d'une direction radiale du logement (20) ;
le logement (20) comprenant en outre une partie de transition (24), la deuxième partie ourlet (22) étant raccordée au corps de logement (23) par la partie de transition (24), la partie de transition (24) s'étendant dans le logement (20) depuis le corps de logement (23) en direction du capuchon d'extrémité (30) le long de la direction radiale du logement (20), la deuxième partie ourlet (22) étant enroulée vers l'extérieur par rapport au logement (20), et la première partie ourlet (33) enveloppant la deuxième partie ourlet (22) ;
la partie de renforcement (31) s'étendant le long de la direction radiale du capuchon d'extrémité (30) ;
et la partie de renforcement (31) étant présente en plusieurs exemplaires, et la pluralité de parties de renforcement (31) étant distribuées à des intervalles le long d'une circonférence du capuchon d'extrémité (30).
